(19) Europäisches Patentamt
European Patent Office
Office européen des brevets

(11) **EP 4 506 410 A1**

(12) **EUROPEAN PATENT APPLICATION**

(43) Date of publication:
**12.02.2025 Bulletin 2025/07**

(21) Application number: **23190570.4**

(22) Date of filing: **09.08.2023**

(51) International Patent Classification (IPC):
*C08L 23/12* *(2006.01)*

(52) Cooperative Patent Classification (CPC):
(C-Sets available)
**C08L 23/12;** C08L 2205/03; C08L 2207/20 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
• **GITSAS, Antonios**
**4021 Linz (AT)**
• **STOCKREITER, Wolfgang**
**4021 Linz (AT)**
• **KAHLEN, Susanne Margarete**
**4021 Linz (AT)**
• **COSTA, Francis Reny**
**4021 Linz (AT)**

(74) Representative: **Maiwald GmbH**
**Elisenhof**
**Elisenstraße 3**
**80335 München (DE)**

(54) **FLAME RETARDANT POLYPROPYLENE COMPOSITION**

(57)     The present invention is directed to a polypropylene composition (C) comprising a propylene homopolymer, a mixed-plastics polypropylene blend (PPB), a flame retardant (FR), fibers (F) and optionally an adhesion promoter (AP) as well as an article comprising said polypropylene composition (C).

**EP 4 506 410 A1**

(52) Cooperative Patent Classification (CPC): (Cont.)

C-Sets
**C08L 23/12, C08L 23/12, C08L 23/06, C08L 51/06,
C08K 5/0066, C08K 7/14**

## Description

The present invention relates to a polypropylene composition comprising a mixed-plastics polypropylene blend (PPB) and a flame retardant (FR) and an article comprising said polypropylene composition.

## Technical background

Manufacturers of electric motors and power electronic components have been using housings made of steel or die-cast aluminium. However, as many of the components are now actively cooled, plastic solutions are a possibility for lightweight construction. Some of such existing alternatives are mainly based on PC/ABS or polyamide, which are engineering plastics expensive in production and coming with a high $CO_2$ footprint.

Among others, one mandatory requirement for electronic enclosures is to achieve the flammability class UL94 V-0 at a thicknesses of below 1.5 mm. Materials achieving those requirements are most likely metals, halogen based flame retardant-reinforced polymers, polymers with an inherent flame retardant nature, or using non-halogen based flame retardant-reinforced polymers, e.g. PC/ABS flame retardant systems. Due to the high loading of flame-retardant additives in such flame retardant systems, reduction in material performance and problems in conversion occur. Furthermore, an anti-dripping agent is commonly needed to prevent dripping during combustion.

Propylene polymers are also applicable as base polymers for flame retardant systems. Generally speaking, glass fibers are used with polypropylene to achieve certain mechanical properties (e.g. stiffness). The main disadvantage of glass fiber reinforced polypropylene is, however, the dimensional stability in fiber direction and high warpage, especially when high flow polypropylenes are applied as base polymers. Low warpage, however, is essential especially for high precision parts (e.g. cell holder, etc.).

In the last years polymer waste has been identified as a big environmental and economical problem. Therefore, efforts have been made for recycling polymer waste and using the recycled polymers in upcycling applications. Thereby, often a decrease in mechanical performance has been observed upon compounding virgin and recycled material.

WO 2022/189647 A1 discloses flame retardant reinforced high flow polypropylene compositions, made of virgin components, which fulfil the requirements of UL94 V-0 and shows low warpage while the mechanical properties remain on a high level.

It has surprisingly been found that by replacing up to 30 wt.-% of the virgin propylene polymer used in the compositions of WO 2022/189647 A1 with a mixed-plastics polypropylene blend (PPB), preferably from post-consumer waste, against expectations no loss in mechanical properties and in the UL94 test is observed.

## Summary of the invention

The present invention relates to a polypropylene composition (C), comprising

i) 5.0 to 40.0 wt.-% of a propylene homopolymer (PP-H) having a melt flow rate $MFR_2$ (230 °C, 2.16 kg) determined according to ISO 1133 of at least 75.0 g/10 min,
ii) 5.0 to 20.5 wt.-% of a mixed-plastics polypropylene blend (PPB) having a melt flow rate $MFR_2$ (230 °C, 2.16 kg) determined according to ISO 1133 of at least 15.0 g/10 min
iii) 10.0 to 40.0 wt.-% of a flame retardant (FR),
iv) 10.0 to 40.0 wt.-% of fibers (F), and
v) 0.0 to 5.0 wt.-% of an adhesion promoter (AP),

wherein all weight contents are based on the overall weight of the polypropylene composition (C).

Further, the present invention relates to an article comprising the polypropylene composition (C) as described above or below.

## Definitions

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below. Unless clearly indicated otherwise, use of the terms "a," "an," and the like refers to one or more.

Mixed plastics is defined as the presence of low amounts of compounds usually not found in virgin polypropylene blends such as polystyrenes, polyamides, polyesters, wood, paper, limonene, aldehydes, ketones, fatty acids, metals, and/or long term decomposition products of stabilizers. Virgin polypropylene blends denote blends as directly originating from the production process without intermediate use.

As a matter of definition "mixed plastics" can be equated with detectable amounts of polystyrene and/or polyamide-6 and/or limonene and/or fatty acids.

Mixed plastics thereby can originate from both post-consumer waste and industrial waste, as opposed to virgin polymers. Post-consumer waste refers to objects having completed at least a first use cycle (or life cycle), i.e. having already served their first purpose. In contrast to that, industrial waste refers to manufacturing scrap, respectively conversion scrap, which does not normally reach a consumer.

The term "virgin" denotes the newly produced materials and/or objects prior to their first use, which have not already been recycled.

The term "recycled material" such as used herein denotes materials reprocessed from "recycled waste".

A polymer blend is a mixture of two or more polymeric components. In general, the blend can be prepared by mixing the two or more polymeric components. A suitable mixing procedures known in the art is post-polymerization blending. Post-polymerization blending can be dry blending of polymeric components such as polymer powders and/or compounded polymer pellets or melt blending by melt mixing the polymeric components.

A mixed-plastic polypropylene blend indicates that the blend predominantly comprises polypropylene; however, small amounts of other plastic are present.

A mixed-plastic polyethylene blend indicates that the blend predominantly comprises polyethylene; however, small amounts of other plastic are present.

Recyclate blends, in particular post-consumer recyclate blends, are almost always mixed-plastic blends, which reflects the efficiency of the sorting in state of the art recycling processes.

A polypropylene means a polymer being composed of units derived from propylene in an amount of more than 50 mol-%.

A polyethylene means a polymer being composed of units derived from ethylene in an amount of more than 50 mol-%.

A propylene homopolymer is a polymer, which essentially consists of propylene monomer units. Due to impurities especially during commercial polymerization processes a propylene homopolymer can comprise up to 0.1 mol% comonomer units, preferably up to 0.05 mol% comonomer units and most preferably up to 0.01 mol% comonomer units.

The presence of a heterophasic nature can be easily determined by the number of glass transition points, like in dynamic-mechanical analysis (DMA), and/or high resolution microscopy, like scanning electron microscopy (SEM), transmission electron microscopy (TEM) or atomic force microscopy (AFM).

The term "XCS" refers to the xylene cold soluble fraction (XCS wt.-%) determined at 25 °C according to ISO 16152. The term "XCI" refers to the xylene cold insoluble fraction (XCI wt.-%) determined at 25 °C according to ISO 16152.

Reactor blend is a blend originating from the production in two or more reactors coupled in series or in a reactor having two or more reaction compartments. A reactor blend may alternatively result from blending in solution. A reactor blend stands in contrast to a compound as produced by melt extrusion.

If not indicated otherwise "%" refers to weight-% (wt.-%).

**Detailed description**

The present invention relates to a polypropylene composition (C), comprising

i) 5.0 to 40.0 wt.-%, preferably 10.0 to 35.0 wt.-%, more preferably 20.0 to 30.0 wt.-% of a propylene homopolymer (PP-H) having a melt flow rate $MFR_2$ (230 °C, 2.16 kg) determined according to ISO 1133 of at least 75.0 g/10 min,

ii) 5.0 to 20.5 wt.-%, preferably 10.0 to 20.3 wt.-%, more preferably 150 to 20.1 wt.-% of a mixed-plastics polypropylene blend (PPB) having a melt flow rate $MFR_2$ (230 °C, 2.16 kg) determined according to ISO 1133 of at least 15.0 g/10 min

iii) 10.0 to 40.0 wt.-%, 15.0 to 35.0 wt.-%, more preferably 20.0 to 32.5 wt.-% of a flame retardant (FR),

iv) 10.0 to 40.0 wt.-% of fibers (F), preferably 12.0 to 38.0 wt.-%, more preferably 20.0 to 30.0 wt.-%, and

v) 0.0 to 5.0 wt.-%, preferably 0.4 to 3.0 wt.-%, more preferably 1.0 to 2.0 wt.-% of an adhesion promoter (AP),

wherein all weight contents are based on the overall weight of the polypropylene composition (C).

It is preferred that the overall amounts of the propylene homopolymer (PP-H), the mixed-plastics polypropylene blend (PPB), the flame retardant (FR), the fibers (F) and optionally the adhesion promoter (AP) together make up at least 90 wt.-% of the polypropylene composition (C).

The polypropylene composition (C) according to the present invention may further comprise additives (AD) such as acid scavengers, antioxidants, colorants, light stabilizers, slip agents, anti-scratch agents, dispersing agents, processing aids, lubricants, pigments, and the like.

Accordingly, it is preferred that the polypropylene composition (C) comprises, more preferably consists of

i) 5.0 to 40.0 wt.-%, preferably 10.0 to 35.0 wt.-%, more preferably 20.0 to 30.0 wt.-% of a propylene homopolymer (PP-H) having a melt flow rate $MFR_2$ (230 °C, 2.16 kg) determined according to ISO 1133 of at least 75.0 g/10 min,

ii) 5.0 to 20.5 wt.-%, preferably 10.0 to 20.3 wt.-%, more preferably 150 to 20.1 wt.-% of a mixed-plastics polypropylene blend (PPB) having a melt flow rate $MFR_2$ (230 °C, 2.16 kg) determined according to ISO 1133 of at least 15.0 g/10 min

iii) 10.0 to 40.0 wt.-%, 15.0 to 35.0 wt.-%, more preferably 20.0 to 32.5 wt.-% of a flame retardant (FR),

iv) 10.0 to 40.0 wt.-% of fibers (F), preferably 12.0 to 38.0 wt.-%, more preferably 20.0 to 30.0 wt.-%, and

v) 0.0 to 5.0 wt.-%, preferably 0.4 to 3.0 wt.-%, more preferably 1.0 to 2.0 wt.-% of an adhesion promoter (AP), and

vi) 0.01 to 5.0 wt.-%, preferably 0.1 to 3.5 wt.-%, more preferably 0.2 to 2.0 wt.-% of additives (AD)

wherein all weight contents are based on the overall weight of the polypropylene composition (C). The additives (AD) are described in more detail below.

It is preferred that the overall amounts of the propylene homopolymer (PP-H), the mixed-plastics polypropylene blend (PPB), the flame retardant (FR), the fibers (F), the adhesion promoter (AP) and the additives (AD) together make up at least 90 wt.-% of the polypropylene composition (C), more preferably sum up to 100 wt.-%.

According to a preferred embodiment of the present invention, the polypropylene composition (C) is free of fluoropolymers. In particular, it is preferred that the polypropylene composition (C) does not contain fluoropolymers in amounts exceeding 0.5 wt.-%, more preferably 0.1 wt.-%, still more preferably 0.01 wt.-%, like 0.001 wt.-%. It is especially preferred that no fluoropolymers have been used in the production of the polypropylene composition (C).

As used herein, the term "fluoropolymer" refers to a polymeric compound comprising fluorine atoms. Examples for fluoropolymers are poly(tetrafluoro ethylene) (PTFE), tetrafluoroethylene-hexafluoropropylene-copolymer (FEP) and polychlorotrifluoroethylene (PCTFE).

It is preferred that the polypropylene composition (C) according to the present invention has a melt flow rate $MFR_2$ of from 2.5 to 30.0 g/10 min, preferably from 5.0 to 25.0 g/10 min, more preferably from 10.0 to 22.5 g/10 min, determined according to ISO 1133 at 2.16 kg and 230°C.

Regarding the mechanical properties, it is preferred that the polypropylene composition (C) has a tensile modulus determined according to ISO 527-1A at 23 °C of at least 5500 MPa, such as from 5500 to 10000 MPa, preferably from 6000 to 9500 MPa, more preferably from 6250 to 9000 MPa.

Further, it is preferred that the polypropylene composition (C) has a tensile strength determined according to ISO 527-1A at 23 °C of at least 50 MPa, such as from 50 to 100 MPa, preferably from 55 to 95 MPa, more preferably from 60 to 90 MPa.

Still further, it is preferred that the polypropylene composition (C) has a tensile stress at break determined according to ISO 527-1A at 23 °C of at least 1.7 %, such as from 1.7 to 5.0 %, preferably from 2.0 to 4.5 %, more preferably from 2.2 to 4.0 %.

Additionally or alternatively to the previous paragraph, it is preferred that the polypropylene composition (C) has a Charpy notched impact strength determined according to ISO 179 1eA at 23 °C of at least 6.5 kJ/m², such as from 6.5 to 15.0 kJ/m², preferably from 6.7 to 12.5 kJ/m², more preferably from 7.0 to 10.0 kJ/m².

Preferably the polypropylene composition (C) fulfills the requirements of the Standard for Safety of Flammability of Plastic Materials UL 94 V-0, when determined according to the method "UL 94 vertical burning test" as described herein under "Measuring Methods" using a specimen of 1.5 mm thickness and applying condition part 1 (i.e. samples are conditioned in a constant room temperature of 23±2 °C and 50±10% humidity for 48 hours).

Further, the polypropylene composition (C) preferably fulfills the requirements of the Standard for Safety of Flammability of Plastic Materials UL 94 V-0, when determined according to the method "UL 94 vertical burning test" as described herein under "Measuring Methods" using a specimen of 1.5 mm thickness and applying condition part 1 (i.e. samples are conditioned in an air circulating oven for 168 hours at 70 ± 1 °C and then cooled in the desiccator for at least 4 hours at room temperature).

The polypropylene composition (C) is preferably obtained by blending, preferably melt-blending the propylene homopolymer (PP-H), the mixed-plastics polypropylene blend (PPB), the flame retardant (FR), the glass fibers (GF), the adhesion promoter (AP) and optionally the additives (AD).

In the following, the propylene homopolymer (PP-H), the mixed-plastics polypropylene blend (PPB), the flame retardant (FR), the glass fibers (GF) and the adhesion promoter (AP) are described in more detail.

Propylene homopolymer (PP-H)

The polypropylene composition (C) comprises a propylene homopolymer (PP-H). The propylene homopolymer (PP-H) can also be a mixture of two or more propylene homopolymer components. It is, however, preferred that the propylene homopolymer (PP-H) consists of a single propylene homopolymer component.

The propylene homopolymer (PP-H) has a melt flow rate $MFR_2$ (230 °C, 2.16 kg) determined according to ISO 1133 of at least 45.0 g/10 min, such as from 45.0 to 750 g/10 min, preferably from 75.0 to 700 g/10 min, more preferably from 100 to 650 g/10 min.

In one specific embodiment the propylene homopolymer (PP-H) has a melt flow rate $MFR_2$ (230 °C, 2.16 kg) determined according to ISO 1133 in the range of 105 to 600 g/10 min, preferably from 110 to 550 g/10 min, more preferably 120 to 500 g/10 min, still more preferably 200 to 500 g/10 min, and most preferably 300 to 500 g/10 min.

Preferably the propylene homopolymer (PP-H) has a melting temperature Tm in the range of from 155 to 170°C, more preferably from 157 to 165°C, determined by DSC.

Further, the propylene homopolymer (PP-H) preferably has a density in the range of from 890 to 910 kg/m$^3$, more preferably from 895 to 905 kg/m$^3$, determined according to ISO 1183.

Preferably, the propylene homopolymer (PP-H) has a polydispersity index, being the ratio of weight average molecular weight to number average molecular weight, Mw/Mn, determined by GPC measurement of less than 5.0, such as from 1.5 to 4.5, preferably from 2.0 to 4.0.

It is preferred that the propylene homopolymer (PP-H) has a flexural modulus of at least 1200 MPa, such as from 1200 MPa to 1750 MPa, preferably from 1400 MPa to 1600 MPa, determined according to ISO 178 method A.

The propylene homopolmyer (PP-H) can be produced directly in a polymerization reactor by well known processes, described in several patent applications (for example in EP 0 320 150, EP 0 480 190, EP 0 622 380, EP 1 303 547, EP 1 538 167, EP 1 783 145, WO 2007/140019, etc.). Alternatively the propylene homopolymer (PP-H) can be obtained by controlled rheology (CR) techniques, including, e.g. visbreaking, which means that a polymer, having low melt flow rate, is subjected to a post-reactor treatment, wherein the polymer molecules are subjected to controlled scission in molten state. The scission may be carried out by mechanical shearing, radiation and oxidation or chemically with peroxy compounds. Preferably controlled rheology treatments are carried out using organic peroxides. The process of visbreaking a propylene polymer material is well known to those skilled in the art and is described in several patent applications (for example in US 3 940 379, US 4 951 589, US 4 282 076, US 5 250 631, EP 0 462 574, WO 02/096986, WO 2004/113438, etc.). The polymer used as starting compound for the controlled rheology treatment may be produced by any polymerisation process known in the art. The polymerisation process may be a continuous process or a batch process utilising known methods and operating in liquid phase, optionally in the presence of an inert diluent, or in gas phase or by mixed liquid-gas techniques. The process is preferably carried out in the presence of a stereospecific catalyst system. As catalyst any ordinary stereospecific Ziegler-Natta catalysts or any metallocene catalyst capable of catalysing the formation of a propylene polymer can be used.

The propylene homopolymer (PP-H) preferably is a virgin polymer.

Propylene homopolymers suitable as propylene homopolymer (PP-H) are commercially available.

Before blending with the other components for preparing the polypropylene composition (C) the propylene homopolymer (PP-H) can be aerated, e.g. as described in EP 3 786 190 A1, for removing volatile components.

Mixed-Plastics Polypropylene Blend (PPB)

The polypropylene composition (C) comprises a mixed-plastics polypropylene blend (PPB).

The mixed-plastics polypropylene blend (PPB) is a polypropylene rich recycled material, meaning that it comprises significantly more polypropylene than polyethylene. Recycled waste streams, which are high in polypropylene can be obtained for example from the automobile industry, particularly as some automobile parts such as bumpers are sources of fairly pure polypropylene material in a recycling stream.

Preferably, the polypropylene rich recycled material is obtained from recycled waste by means of plastic recycling processes known in the art. Such recyclates are commercially available, e.g. from Corepla (Italian Consortium for the collection, recovery, recycling of packaging plastic wastes), Resource Plastics Corp. (Brampton, ON), Kruschitz GmbH, Plastics and Recycling (AT), Vogt Plastik GmbH (DE), Mtm Plastics GmbH (DE), Borealis AG (AT) etc. Non-exhaustive examples of polypropylene rich recycled materials include Purpolen® PP (Mtm Plastics GmbH) and Borcycle™ M (Borealis AG).

During recycling, any reasonable measure will usually be taken for any components other than polyethylene and polypropylene to be reduced/removed as far as the final application or use suggests such measures; however, other components are often present in small amounts.

Other such components include polystyrene (PS), polyamides (PA), polyethylene terephthalate (PET), which are all present in as low an amount as possible, preferably below the detection limit.

The mixed-plastics polypropylene blend (PPB) preferably has a melt flow $MFR_2$, determined according to ISO 1133 at 230 °C and 2.16 kg, in the range from 15.0 to 40 g/10min, more preferably of 16.5 to 35.0 g/10min, still more preferably of 17.5 to 30.0 g/10min.

Further, the mixed-plastics polypropylene blend (PPB) preferably has a density of from 900 to 1030 kg/m$^3$, more preferably from 905 to 1020 kg/m$^3$, still more preferably from 910 to 1010 kg/m$^3$, determined according to ISO 1183.

The mixed-plastics polypropylene blend (PPB) can be characterized by the CRYSTEX QC analysis. In the CRYSTEX QC analysis a crystalline fraction (CF) and a soluble fraction (SF) are obtained which can be quantified and analysed in regard of the monomer and comonomer content as well as the intrinsic viscosity (iV).

The mixed-plastics polypropylene blend (PPB) preferably shows one or all of the following properties in the CRYSTEX QC analysis:

- a crystalline fraction (CF) content determined according to CRYSTEX QC analysis in the range from 80.0 to 96.0 wt.-%, preferably from 82.5 to 95.5 wt.-%, more preferably from 85.0 to 95.0 wt.-%; and
- a soluble fraction (SF) content determined according to CRYSTEX QC analysis in the range from 4.0 to 20.0 wt.-%, preferably from 4.5 to 17.5 wt.-%, more preferably from 5.0 to 15.0 wt.-%.

Said crystalline fraction (CF) preferably has one or more, preferably all of the following properties:

- an ethylene content (C2(CF)), as determined by FT-IR spectroscopy calibrated by quantitative $^{13}$C-NMR spectroscopy, of 1.0 to 15.0 wt.-%, preferably in the range of 1.5 to 12.5 wt.-%, more preferably of 2.0 to 11.5 wt%; and/or
- an intrinsic viscosity (iV(CF)), as measured in decalin according to DIN ISO 1628/1 at 135°C, of 0.9 to 2.1 dl/g, preferably in the range of 1.0 to 2.0 dl/g, more preferably in the range of 1.1 to 1.9 dl/g.

Said soluble fraction (SF) preferably has one or more, preferably all of the following properties:

- an ethylene content (C2(SF)), as determined by FT-IR spectroscopy calibrated by quantitative $^{13}$C-NMR spectroscopy, in the range from 15.0 to 40.0 wt.-%, preferably from 20.0 to 37.5 wt.-%, more preferably from 22.5 to 35.0 wt.-%; and/or
- an intrinsic viscosity (iV(SF)), as measured in decalin according to DIN ISO 1628/1 at 135°C, of 0.9 to 2.2 dl/g, preferably in the range of 1.0 to 2.1 dl/g, more preferably in the range of 1.1 to 2.0 dl/g.

The mixed-plastics polypropylene blend (PPB) preferably comprises units derived from ethylene in an amount of from 2.5 to 15.0 wt.-%, more preferably from 3.0 to 13.5 wt.-%, still more preferably from 3.5 to 12.5 wt.-%.

The mixed-plastics polypropylene blend (PPB) preferably has an inorganic residue content, as determined by calcination analysis according to DIN ISO 1172:1996, of 0.05 to 3.0 wt.-%, more preferably in the range from 0.5 to 2.5 wt.-%, most preferably in the range from 1.0 to 2.5 wt.-%

The mixed-plastics polypropylene blend (PPB) preferably originates from post-industrial waste or post-consumer waste, most preferably from post-consumer waste.

The mixed-plastics polypropylene blend (PPB) preferably has a limonene content, determined by solid phase microextraction (HS-SPME-GC-MS), in the range from 1 to 250 $mg/m^3$.

The presence of limonene is indicative that the mixed-plastics polypropylene blend (PPB) originates from post-consumer waste.

Further indications of the recycled-nature of the mixed-plastics polypropylene blend (PPB) include the presence of other polymers, such as polystyrene and polyamide-6, and the presence of fatty acids.

Accordingly, it is further preferred that the mixed-plastics polypropylene blend (PPB) comprises one or more of polystyrene, polyamide-6 and fatty acids, preferably comprises each of polystyrene, polyamide-6 and fatty acids.

The mixed-plastics polypropylene blend (PPB) preferably has a CIELAB colour space (L*a*b) of

i) L* of from 50.0 to 97.0, more preferably from 80.0 to 97.0;
ii) a* of from -5.0 to 0.0;
iii) b* of from 0.0 up to, but not including, 22.0.

The mixed-plastics polypropylene blend (PPB) preferably has a tensile modulus of from 1000 to 1750 MPa, more preferably from 1100 to 1600 MPa, still more preferably from 1150 to 1500 MPa.

Further the mixed-plastics polypropylene blend (PPB) preferably has a Charpy Notched Impact Strength at 23°C (CNIS at 23°C) of from 3.0 to 7.5 $kJ/m^2$, more preferably from 4.0 to 7.0 $kJ/m^2$.

Before blending with the other components for preparing the polypropylene composition (C) the mixed-plastics polypropylene blend (PPB) can be aerated, e.g. as described in EP 3 786 190 A1, for removing volatile components.

Flame retardant (FR)

The polypropylene composition (C) comprises a flame retardant (FR). The flame retardant (FR) can also be a mixture of two or more flame retardants (FR).

The flame retardant product can be any flame retardant product suitable for polypropylene based resins.

Preferably the flame retardant (FR) is free of halogens. In other words, it is preferred that the flame retardant (FR) does not contain any organic or inorganic compounds containing halogen atoms. As used herein, the term "halogen" refers to the elements of group 17 of the periodic table.

It is preferred that the polypropylene composition (C) comprises a nitrogen-containing flame retardant (FR).

It is preferred that the nitrogen-containing flame retardant (FR) comprises at least one nitrogen-containing phosphate, preferably at least one organic nitrogen-containing phosphate. Preferably, said organic nitrogen-containing phosphate is a phosphate of heterocyclic $C_3$-$C_6$-, more preferably $C_3$-$C_4$-alkyl or -aryl compounds comprising at least one N-atom.

According to a preferred embodiment of the present invention, the nitrogen-containing flame retardant (FR) comprises a first nitrogen-containing phosphate (FR1) and a second nitrogen-containing phosphate (FR2) different from the first nitrogen-containing phosphate (FR1).

Preferably, the first nitrogen-containing phosphate (FR1) and the second nitrogen-containing phosphate (FR2) are organic nitrogen-containing phosphates. It is especially preferred that the first nitrogen-containing phosphate (FR1) and the second nitrogen-containing phosphate (FR2) are phosphates of heterocyclic $C_3$-$C_6$-, more preferably $C_3$-$C_4$-alkyl or -aryl compounds comprising at least one N-atom.

It is preferred that the first nitrogen-containing phosphate (FR1) is an organic nitrogen-containing polyphosphate. More preferably, the first nitrogen-containing phosphate (FR1) is a polyphosphate of a heterocyclic $C_3$-$C_6$-, more preferably $C_3$-$C_4$-aryl compound comprising at least one N-atom. It is especially preferred that the first nitrogen-containing phosphate (FR1) is melamine polyphosphate.

It is preferred that the second nitrogen-containing phosphate (FR2) is an organic nitrogen-containing diphosphate. More preferably, the second nitrogen-containing phosphate (FR2) is a diphosphate of a heterocyclic $C_3$-$C_6$-, more preferably $C_3$-$C_4$-alkyl compound comprising at least one N-atom, like two N-atoms. It is especially preferred that the second nitrogen-containing phosphate (FR2) is piperazine pyrophosphate.

According to a preferred embodiment of the present invention, the weight ratio between the first nitrogen-containing phosphate (FR1) and the second nitrogen-containing phosphate (FR2) is in the range of 60:40 to 40:60.

Suitable nitrogen-containing flame retardants (FR) are preferably commercially available. A highly suitable example of a commercial nitrogen-containing flame retardant (FR) is the flame retardant product sold under the trade name Phlamoon-1090A, produced and supplied by SULI.

As outlined above, the polypropylene composition (C) according to the present invention comprises 10.0 to 40.0 wt.-%, preferably 18.0 to 35.0 wt.-%, more preferably 20.0 to 38.0 wt.-%, still more preferably 20.0 to 30.0 wt.-%, even more preferably 20.0 to 27.0 wt.%, like 20.0 to 25.0 wt.-% of the flame retardant (FR), based on the overall weight of the polypropylene composition (C).

The amount of the flame retardant (FR) means herein the amount based on the overall weight of the polypropylene composition (C) of the flame retardant (FR) as supplied by the producer thereof. Accordingly, the flame retardant (FR) may contain further components in minor amounts, like additives, flame retardant synergists and/or carrier medium. Thus it is to be understood that such further components are calculated to the amount of the flame retardant (FR).

<u>Fibers (F)</u>

Essential components of the polypropylene composition (C) are fibers (F).

Preferably the fibers (F) are selected from the group consisting of glass fibers, carbon fibers, polymeric fibers, cellulose fibers, metal fibers, mineral fibers, ceramic fibers and mixtures thereof. More preferably, the fibers (F) are glass fibers and/or carbon fibers.

It is especially preferred that the fibers (F) are glass fibers (GF). Preferably, the glass fibers (GF) are cut glass fibers, also known as short glass fibers (SGF) or chopped strands, and/or long glass fibers (LGF), preferably long glass fibers (LGF) obtained from glass rovings.

It is particularly preferred that the fibers (F) are short glass fibers (SGF)

The cut or short glass fibers (SGF) within the fiber reinforced composition (C) preferably have a weight average fiber length determined according to FASEP after injection moulding according to EN ISO 1873-2 of the fiber reinforced composition (C) in the range of 0.2 to 1.2 mm, more preferably in the range of 0.25 to 1.0 mm, still more preferably in the range of 0.3 to 0.8 mm.

The initial average length of the short glass fibers (SGF) as provided by the supplier, i.e. the average length of the short fibers (SFG) before melt blending with the propylene polymer (PP), the flame retardant (FR) and the optional adhesion promoter (AP), differs from the above mentioned weight average fiber length of the short glass fibers (SGF) within the fiber reinforced composition (C).

The cut or short glass fibers (SGF) used in the fiber reinforced composition (C) preferably have an initial average length in the range of from 2.0 to 10.0 mm, more preferably in the range of 2.3 to 9.0 mm, still more preferably in the range of 2.5 to 8.0 mm, like in the range of 3.0 to 7.0 mm.

The cut or short glass fibers (SGF) used in the fiber reinforced composition (C) preferably have an average diameter of from 5 to 20 $\mu$m, more preferably from 6 to 18 $\mu$m, still more preferably 8 to 16 $\mu$m.

Preferably, the short glass fibers (SGF) have an initial aspect ratio of 125 to 650, preferably of 150 to 500, more preferably 200 to 450. The aspect ratio is the relation between average length and average diameter of the fibers.

The initial average length and initial average aspect ratio of the short glass fibers (SGF) refer to the values of the raw material as provided by the supplier.

Adhesion promoter (AP)

In accordance with the present invention, the polypropylene composition (C) optionally further comprises an adhesion promoter (AP). The adhesion promoter

(AP) is specified as being a polar modified polypropylene (PM-PP) homo- or copolymer.

For embodiments of the present invention wherein the fibers (F) are glass fibers and/or carbon fibers, it is preferred that the polypropylene composition (C) comprises the adhesion promoter (AP).

The polar modified polypropylene (PM-PP) homo- or copolymer comprises a low molecular weight compound having reactive polar groups. Modified polypropylene homopolymers and copolymers, like copolymers of propylene and ethylene or with other $\alpha$-olefins, e.g. C4 to C10 $\alpha$-olefins, are most preferred, as they are highly compatible with the propylene polymer (PP) of the polypropylene composition (C).

In terms of structure, the polar modified polypropylene (PM-PP) homo- or copolymer are preferably selected from graft homo- or copolymers.

In this context, preference is given to polar modified polypropylene (PM-PP) homo-or copolymers containing groups derived from polar compounds, in particular selected from the group consisting of acid anhydrides, carboxylic acids, carboxylic acid derivatives, primary and secondary amines, hydroxyl compounds, oxazoline and epoxides, and also ionic compounds.

Specific examples of said polar compounds are unsaturated cyclic anhydrides and their aliphatic diesters, and the diacid derivatives. In particular, one can use maleic anhydride and compounds selected from C1 to C10 linear and branched dialkyl maleates, C1 to C10 linear and branched dialkyl fumarates, itaconic anhydride, C1 to C10 linear and branched itaconic acid dialkyl esters, acrylic acid, maleic acid, fumaric acid, itaconic acid and mixtures thereof.

Particular preference is given to use a polypropylene homo- or copolymer grafted with maleic anhydride or acrylic acid as the polar modified polypropylene (PM-PP) homo- or copolymer, i.e. the adhesion promoter (AP).

The modified polymer, i.e. the adhesion promoter, can be produced in a simple manner by reactive extrusion of the polymer, for example with maleic anhydride or acrylic acid in the presence of free radical generators (like organic peroxides), as disclosed for instance in US 4,506,056, US 4,753,997 or EP 1 805 238.

Preferred amounts of groups derived from polar compounds in the polar modified polypropylene (PM-PP) homo- or copolymer, i.e. the adhesion promoter (AP), are from 0.5 to 5.0 wt.-%. For example, the amount may be in the range of 0.5 wt.-% to 4.5 wt.-%, preferably in the range of 0.5 wt.-% to 4.0 wt.-%, more preferably in the range of 0.5 wt.-% to 3.5 wt.-%.

Preferred values of the melt flow rate $MFR_2$ (230 °C, 2.16 kg) for the polar modified polypropylene (PM-PP) homo- or copolymer, i.e. for the adhesion promoter (AP), are from 20.0 to 400 g/10 min. It is particularly preferred that the polar modified polypropylene (PM-PP) homo- or copolymer has a melt flow rate $MFR_2$ (230 °C, 2.16 kg) in the range of 40.0 to 300 g/10 min, more preferably in the range of 50.0 to 250 g/10 min.

In one preferred embodiment of the present invention, the adhesion promoter (AP) is a maleic anhydride modified polypropylene homo-or copolymer and/or an acrylic acid modified polypropylene homo-or copolymer. Preferably, the adhesion promoter (AP) is a maleic anhydride modified polypropylene homopolymer and/or an acrylic acid modified polypropylene homopolymer and preferably a maleic anhydride modified polypropylene homopolymer. For example, suitable polar modified polypropylene (PM-PP) homo- or copolymers include, for example, a polypropylene homopolymer grafted with maleic anhydride (PP-g-MAH) and a polypropylene homopolymer grafted with acrylic acid (PP-g-AA).

Additives (AD)

In addition to the propylene homopolymer (PP-H), the mixed-plastics polypropylene blend (PPB), the nitrogen-containing flame retardant (FR), the fibers (F) and the optional adhesion promoter (AP), the polypropylene composition (C) may include additives (AD). Typical additives are acid scavengers, antioxidants, colorants, light stabilizers, slip agents, anti-scratch agents, dispersing agents, processing aids, lubricants, pigments, and the like.

The content of additives in the polypropylene composition (C) of the invention will normally not exceed 5.0 wt.-%, preferably being in the range of 0.5 to 3.5 wt.-%.

Such additives are commercially available and for example described in "Plastic Additives Handbook", 6th edition 2009 of Hans Zweifel (pages 1141 to 1190).

Furthermore, the term "additives (AD)" according to the present invention also includes carrier materials, in particular polymeric carrier materials.

Polymeric carrier material

Preferably the polypropylene composition (C) does not comprise (a) further polymer(s) different to the propylene homopolymer (PP-H), the mixed-plastics polypropylene blend (PPB), and the adhesion promoter (AP), in an amount exceeding 5.0 wt.-%, preferably in an amount exceeding 3.0 wt.-%, more preferably in an amount exceeding 2.0 wt.-%, based on the weight of the polypropylene composition (C). Any polymer being a carrier material for additives (AD) is not calculated to the amount of polymeric compounds as indicated in the present invention, but to the amount of the respective additive.

The polymeric carrier material of the additives (AD) is a carrier polymer to ensure a uniform distribution in the polypropylene composition (C) of the invention. The polymeric carrier material is not limited to a particular polymer. The polymeric carrier material may be ethylene homopolymer, ethylene copolymer obtained from ethylene and $\alpha$-olefin comonomer such as C3 to C8 $\alpha$-olefin comonomer, propylene homopolymer and/or propylene copolymer obtained from propylene and $\alpha$-olefin comonomer such as ethylene and/or C4 to C8 $\alpha$-olefin comonomer. It is preferred that the polymeric carrier material does not contain monomeric units derivable from styrene or derivatives thereof.

Article

The present invention also relates to an article comprising the polypropylene composition (C) as defined above or below. The present invention in particular relates to an article comprising at least 60 wt.-%, more preferably at least 80 wt.-%, still more preferably at least 90 wt.-%, like at least 95 wt.-% or at least 99 wt.-%, of the polypropylene composition (C) as defined above or below. In an especially preferred embodiment the present invention relates to an article consisting of the polypropylene composition (C) as defined above or below.

Preferably, the article is an automotive article in the field of electronic components such as an electric cable insulation, housings of electric devices, containers and parts of power electronic components of automobile parts and home electric appliance parts, and the like.

The present invention will now be described in further detail by the examples provided below.

**Examples**

**A. Measuring methods**

The following definitions of terms and determination methods apply for the above general description of the invention as well as to the below examples unless otherwise defined.

**MFR$_2$ (230 °C)** was measured according to ISO 1133 (230 °C, 2.16 kg load). **MFR$_2$ (190 °C)** was measured according to ISO 1133 (190 °C, 2.16 kg load).

**Quantification of microstructure by NMR spectroscopy**

Quantitative nuclear-magnetic resonance (NMR) spectroscopy was used to quantify the comonomer content and comonomer sequence distribution of the polymers. Quantitative $^{13}$C{$^1$H} NMR spectra were recorded in the solution-state using a Bruker Advance III 400 NMR spectrometer operating at 400.15 and 100.62 MHz for $^1$H and $^{13}$C respectively. All spectra were recorded using a $^{13}$C optimized 10 mm extended temperature probehead at 125°C using nitrogen gas for all pneumatics. Approximately 200 mg of material was dissolved in 3 ml of *1,2*-tetrachloroethane-*d$_2$* (TCE-*d$_2$*) along with chromium-(III)-acetylacetonate (Cr(acac)$_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimized tip angle, 1 s recycle delay and a bilevel WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}$C{$^1$H} NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950.

For polypropylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[mmmm] \% = 100 * (\ mmmm\ /\ \text{sum of all pentads}\ )$$

The presence of 2,1 erythro regio defects was indicated by the presence of the two methyl sites at 17.7 and 17.2 ppm and confirmed by other characteristic sites. Characteristic signals corresponding to other types of regio defects were not observed (Resconi, L., Cavallo, L., Fait, A., Piemontesi, F., Chem. Rev. 2000, 100, 1253).

The amount of 2,1 erythro regio defects was quantified using the average integral of the two characteristic methyl sites at 17.7 and 17.2 ppm:

$$P_{21e} = (\ I_{e6} + I_{e8}\ )\ /\ 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio defects:

$$P_{total} = P_{12} + P_{21e}$$

The mole percent of 2,1 erythro regio defects was quantified with respect to all propene:

$$[21e]\ mol\% = 100 * (\ P_{21e}\ /\ P_{total}\ )$$

For copolymers characteristic signals corresponding to the incorporation of ethylene were observed (Cheng, H. N., Macromolecules 17 (1984), 1950).

With regio defects also observed (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) correction for the influence of such defects on the comonomer content was required.

The comonomer fraction was quantified using the method of Wang et. al. (Wang, W-J., Zhu, S., Macromolecules 33 (2000), 1157) through integration of multiple signals across the whole spectral region in the $^{13}C\{^{1}H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**CRYSTEX**

**Determination of Crystalline and soluble fractions and their respective properties (IV and Ethylene content)**

The crystalline (CF) and soluble fractions (SF) of the polypropylene compositions as well as the comonomer content and intrinsic viscosities of the respective fractions were analyzed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596)

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (iV) an online 2-capillary viscometer is used.

The IR4 detector is a multiple wavelength detector measuring IR absorbance at two different bands ($CH_3$ stretching vibration (centred at app. 2960 $cm^{-1}$) and the CH stretching vibration (2700-3000 $cm^{-1}$) that are serving for the determination of the concentration and the Ethylene content in Ethylene-Propylene copolymers. The IR4 detector is calibrated with series of 8 EP copolymers with known Ethylene content in the range of 2 wt.-% to 69 wt.-% (determined by $^{13}$C-NMR) and each at various concentrations, in the range of 2 and 13mg/ml. To encounter for both features, concentration and ethylene content at the same time for various polymer concentrations expected during Crystex analyses the following calibration equations were applied:

$$Conc = a + b*Abs(CH) + c*(Abs(CH))^2 + d*Abs(CH_3) + e*(Abs(CH_3)^2 +$$
$$f*Abs(CH)*Abs(CH_3) \qquad (Equation\ 1)$$

$$CH_3/1000C = a + b*Abs(CH) + c* Abs(CH_3) + d * (Abs(CH_3)/Abs(CH)) + e *$$
$$(Abs(CH_3)/Abs(CH))^2 \qquad (Equation\ 2)$$

The constants a to e for equation 1 and a to f for equation 2 were determined by using least square regression analysis.

The $CH_3/1000C$ is converted to the ethylene content in wt.-% using following relationship:

$$wt.-\%\ (Ethylene\ in\ EP\ Copolymers) = 100 - CH_3/1000TC * 0.3 \qquad (Equation\ 3)$$

Amounts of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. The determined XS calibration is linear:

$$\text{wt.-\% XS} = 1{,}01 * \text{wt.-\% SF} \qquad \text{(Equation 4)}$$

Intrinsic viscosity (iV) of the parent EP copolymer and its soluble and crystalline fractions are determined with a use of an online 2-capillary viscometer and are correlated to corresponding iV's determined by standard method in decalin according to ISO 1628-3. Calibration is achieved with various EP PP copolymers with iV = 2-4 dL/g. The determined calibration curve is linear:

$$\text{iV (dL/g)} = a * \text{Vsp/c} \quad \text{(equation 5)}$$

The samples to be analyzed are weighed out in concentrations of 10mg/ml to 20mg/ml. To avoid injecting possible gels and/or polymers which do not dissolve in TCB at 160°C, like PET and PA, the weighed out sample was packed into a stainless steel mesh MW 0,077/D 0,05mmm.

After automated filling of the vial with 1,2,4-TCB containing 250 mg/l 2,6-tert-butyl-4-methylphenol (BHT) as antioxidant, the sample is dissolved at 160°C until complete dissolution is achieved, usually for 60 min, with constant stirring of 400rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the iV [dl/g] and the C2 [wt.-%] of the PP composition. During the second injection the soluble fraction (at low temperature) and the crystalline fraction (at high temperature) with the crystallization cycle are measured (wt.-% SF, wt.-% C2, iV).

**Intrinsic viscosity**

Intrinsic viscosity was measured according to DIN ISO 1628/1, October 1999 (in Decalin at 135 °C).

**Density:** ISO 1183, measured on compression moulded plaques.

**DSC analysis, melting temperature ($T_m$) and heat of fusion ($H_f$), crystallization temperature ($T_c$) and heat of crystallization ($H_c$)**

were measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature ($T_c$) and crystallization enthalpy ($H_c$) are determined from the cooling step, while melting temperature ($T_m$) and melting enthalpy ($H_m$) are determined from the second heating step.

**Xylene cold solubles (XCS, wt.-%):** Content of xylene cold solubles (XCS) was determined at 25 °C according ISO 16152; first edition; 2005-07-01.

**Charpy notched impact strength** was determined according to ISO 179-1 / 1eA at 23 °C by using injection moulded test specimens (80 × 10 × 4 mm) prepared according to EN ISO 1873-2.

**Tensile properties** were determined on injection moulded dogbone specimens of 4 mm thickness prepared in accordance with EN ISO 1873-2. Tensile modulus was determined according to ISO 527-1A at a strain rate of 1 mm/min and 23°C, 80 °C and 120 °C., stress at yield was determined at a strain rate of 50 mm/min and 23°C, 80 °C and 120 °C.

**The Flexural Modulus** was determined according to ISO 178 method A (3-point bending test) on 80 mm × 10 mm × 4 mm specimens. Following the standard, a test speed of 2 mm/min and a span length of 16 times the thickness was used. The testing temperature was 23±2° C. Injection moulding was carried out according to ISO 19069-2 using a melt temperature of 230°C for all materials irrespective of material melt flow rate.

**Ash content** was measured according to ISO 3451-1 (1997) standard.

**Limonene detection**

**Estimation of limonene**

The determination of benzene and limonene is based on a static headspace (HS) approach. This analysis uses a combination of a HS sampler with a gas chromatograph (GC) and a mass spectrometer (MS) for screening purposes. Samples were delivered to the lab in sealed aluminium-coated polyethylene (PE) bags. Prior to the analysis, samples were cryo-milled, a portion of 2.000 ± 0.100 g was weighed in a 20 ml HS vial and tightly closed. For every sample, a double determination was performed.

HS/GC/MS parameters

• HS parameters (Agilent G1888 Headspace Sampler)

| | |
|---|---|
| Vial equilibration time: | 120 min (sample), 5 min (standard) |
| Oven temperature: | 100 °C (sample), 200 °C (standard) |
| Loop temperature: | 110 °C (sample), 205 °C (standard) |
| Transfer line temperature: | 120 °C (sample), 210 °C (standard) |
| Low shaking | |

• GC parameters (Agilent 7890A GC System)

| | |
|---|---|
| Column: | ZB-WAX 7HG-G007-22 |
| (30 m x 250 $\mu$m x 1 $\mu$m) | |
| Carrier gas: | Helium 5.0 |
| Flow: | 2 ml/min |
| Split: | 5:1 |
| GC oven program: | 35 °C for 0.1 min |
| | 10 °C/min until 250 °C |
| | 250 °C for 1 min |

• MS parameters (Agilent 5975C inert XL MSD)

| | | |
|---|---|---|
| Acquisition mode: | | Scan |
| Scan parameters: | Low mass: | 20 |
| | High mass: | 200 |
| | Threshold: | 10 |

• Software/Data evaluation

MSD ChemStation E.02.02.1431
MassHunter GC/MS Acquisition B.07.05.2479
AMDIS GC/MS Analysis Version 2.71
NIST/EPA/NIH Mass Spectral Library (2011 version)
NIST Mass Spectral Search Program Version 2.0 g

• AMDIS deconvolution parameters

| | |
|---|---|
| Minimum match factor: | 80 |
| Threshold: | Low |
| Scan direction: | High to Low |
| Data file format: | Agilent files |
| Instrument type: | Quadrupole |
| Component width: | 20 |
| Adjacent peak subtraction: | Two |
| Resolution: | High |
| Sensitivity: | Very high |
| Shape requirements: | Medium |
| Solvent tailing: | 91 m/z |
| Column bleed: | 207 m/z |
| Min. model peaks: | 2 |
| Min. S/N: | 10 |

(continued)

| | |
|---|---|
| Min. certain peaks: | 0.5 |

• MSD ChemStation integration parameters

| | |
|---|---|
| Integrator: | ChemStation |
| Initial area reject: | 0 |
| Initial peak width: | 0.005 |
| Shoulder detection: | off |
| Initial threshold: | 10.5 |

In this study, the statement "below the limit of detection (< LCD)" describes a condition where either the match factor is below 80 (AMDIS) or the signal to noise ratio (Pk-pk S/N = Corrected signal/Pk-pk noise, MSD ChemStation signal to noise report) of the peak in the sample run is below 3. The results refer solely to the measured samples, time of measurement and the applied parameters.

Standard solutions

For a positive identification and comparison with the (lowest) odour detection thresholds (ODT), a limonene standard was used.

For the HS/GC/MS analysis, 5 $\mu$l of the respective standard was injected in a 20 ml HS vial, tightly closed and measured.

Assuming full vaporisation of the standard substance, the concentration limonene in the HS $c_G$ was estimated as listed in the below table.

**Table: Calibration standard and ODT**

| Analyte | Solvent | $c_G$ / mg m$^{-3}$ | Target ion (m/z) | (lowest) ODT / mg m$^{-3}$ [1] |
|---------|---------|---------------------|------------------|--------------------------------|
| Limonene | 2-Butanol | 75 | 68 | 0.21 |

Data evaluation

The concentration of an analyte in the HS $c_G$ is calculated by considering the substance amount $m_G$ and the available HS volume $V_G$ (Equation 1).

$$c_G^{Standard}[\text{mg/m}^3] = \frac{m_G^{Standard}}{V_G^{Standard}}$$

**Equation 1**

To estimate the concentration of an analyte in the HS above a polymer sample, the response factor, *Rf* of a one-point calibration is required (Equation 2). By integrating the extracted ion chromatogram (EIC), the peak area is obtained for the analyte. The corresponding target ion is listed in the above table.

$$Rf = \frac{c_G^{Standard}}{\text{Peak area}^{Standard}}$$

**Equation 2**

The concentration of an analyte in the HS above a polymer sample, $c_G^{Sample}$ is calculated by multiplying the response factor with the EIC peak area of the sample (Equation 3).

$$c_G^{Sample}\,[\mathrm{mg/m^3}] = Rf * \text{Peak area}^{Sample}$$

**Equation 3**

Additionally, the odour relevance of an analyte in the HS above a polymer sample is estimated by the odour activity value (OAV). Therefore, the concentration of an analyte in the HS above a polymer sample $c_G^{Sample}$ is compared with the (lowest) odour detection threshold (ODT) found in literature (Equation 4) [1]. A value above 1 indicates the relevance of an analyte to the odour at the given HS temperature.

$$OAV = \frac{c_G^{Sample}\,[\mathrm{mg/m^3}]}{\text{ODT}\,[\mathrm{mg/m^3}]}$$

**Equation 4**

Considerations and limitations

It must be considered that the ODT for some substances is below the detection limit (LOD) of the method. Therefore, components below the LOD might be missed although still relevant to the overall odour.
The OAV is based on the assumption that the HS parameters are somewhat relatable to the measurement conditions of an ODT determination. Of course, this is not fully applicable because temperature settings of 100 °C are not necessarily chosen for such experiments and have therefore limited practical value. Nevertheless, this approach can at least indicate the odour relevance of the defined marker substances.
Considering all the mentioned assumptions and limitations, the determined concentrations in the HS above the sample and odour activity values must be taken as rough estimates only.

References

[1] Van Gemert L. J., Odour Thresholds: Compilations of odour threshold values in air, water and other media, Utrecht, Oliemans Punter & Partners BV, 2011.
**Average fiber diameter** was determined according to ISO 1888:2006(E), Method B.
**Weight average fiber length and fiber length distribution** were determined according to the FASEP (FAser (German; fiber) SEParation) method on injection moulded test specimens prepared in accordance with EN ISO 1873-2. The fibers are separated from the polymer matrix by pyrolysis in a TGA oven (625 °C for glass fibers, 500 °C for carbon fibers) or by solution and physical separation. The separated fibers are suspended in de-ionized water and the suspension is diluted until the number of fibers and the overlaying of fibers is well balanced. The average fiber length is determined by grey scale image processing on a FASEP 1.9.44.0 (IDM Systems, Darmstadt, Germany) and statistically investigated by calculating average fiber length and fiber length distributions. Accurate results will be achieved for images with a small number of fiber clusters and fibers that were cut in any way. This is achieved by realizing a certain fiber to water fraction. For glass fibers the fraction should be equal of below 30 mg/L, for carbon fibers the fraction should be equal or below 20 mg/L. The number of clusters relative to the free fibers should be below 20 % for short fibers and below 15 % for long fibers.
For evaluation FASEP software (ImageProPlus including FASEP module) is used separating fibers from background, removing dust and other not relevant features, separating fibers if overlaying and measuring automatically the length for each fiber. The average fiber length Ln and weight average fiber length Lp is determined according to ISO 22314:05:2006:

$$\text{Lp} = \frac{\overline{l^2}}{\overline{l}} \qquad\qquad \text{Ln} = \frac{1}{n}\sum_{i=1}^{n} l_i \quad \text{und} \quad \overline{l^2} = \frac{1}{n}\sum_{i=1}^{n} l_i^2$$

The investigation report has to contain the following values next to the settings used:

- Sum of fibres of all images combined per sample
- Ln, Lp (as defined above)
- Lmin, Lmax of fibres of all images combined per sample
- Fibre length distribution

- Fibre mass
- Local fibre fraction

**UL94 Vertical burning test** was performed according to UL 94: 2016. The samples are injection moulded in pieces 125±5 mm length, 13.0±0.5 mm width and a thickness of 0.8 to 3.2 mm (in the example section a thickness of 1.5 mm was used). Under condition part 1, the samples must be conditioned in a constant room temperature of 23±2 °C and 50±10% humidity for 48 hours. Under condition part 2, the samples must be conditioned in an air circulating oven for 168 hours at 70±1 °C and then cooled in the desiccator for at least 4 hours at room temperature, prior to testing. Testing must take place within 30 minutes of the samples being taken from the conditioning. The sample is hanged vertically in the test chamber and subjected to a first ignition for 10 sec, then a second ignition for another 10 sec. The burning time after each ignition is recorded and it is also noted if there is afterglow, burning dripping that ignites the cotton in the bottom of the chamber and if there is flames or glow up to holding clamp. Classifications are V-0, V-1, V-2 or no classification, and the classification is dependent on the thickness of the test object.

## B Experiments

### Mixed-plastics polypropylene blend (PPB)

Table 1 shows the properties of the two polypropylene / polyethylene blends (PPB-1 and PPB-2) as used for the evaluation. As these compositions come from a mechanical recycling process, the properties are indicated as ranges.

**Table 1:** Properties of Polypropylene / Polyethylene Blend Mixtures (Blend PPB-1 and PPB-2)

|  | Blend PPB-1 | Blend PPB-2 |
|---|---|---|
| C2 (Blend A, total), wt.-% | 11.0-11.7 | 5.3 |
| Density, $kg/m^3$ | 915 | 1000 |
| Recycling origin | households | households |
| Limonene, $mg/m^3$ | > 1 | > 1 |
| $MFR_2$ (230°C, ISO1133), g/10min | 20 | 20 |
| CF (CRYSTEX), wt% | 85.7-86.0 | 89.0 |
| iV (CF), dl/g | 1.47-1.48 | 1.61 |
| C2 (CF), wt% | 8.1-10.9 | 3.0 |
| SF (CRYSTEX), wt% | 14.0-14.3 | 11.0 |
| iV (SF), dl/g | 1.89-1.95 | 1.66 |
| C2 (SF), wt% | 30.8-33.1 | 26.0 |
| Tensile modulus, ISO 527-2, MPa | 1200 | 1180 |
| Charpy NIS + 23 °C,ISO 179 1eA, $kJ/m^2$ | 5.5 | 5.0 |

### Heterophasic propylene copolymer HECO

The catalyst used for producing the heterophasic propylene copolymer HECO was a Ziegler-Natta catalyst commercially available from Lyondell Basell (IT), under the trade name ZN180M.
HECO was made in prepolymerization / loop reactor / gas phase reactor 1 / gas phase reactor 2 configuration followed by a pelletization step.
For HECO the catalyst system defined above was used in combination with triethylaluminium (TEAL) as co-catalyst and dicyclopentadienyl-dimethoxy silane (donor D) as external donor.
The polymerization conditions as shown in Table 2.

**Table 2:** Polymerization conditions for the HECO

|  |  | **HECO** |
|---|---|---|
| **Prepolymerization** | | |
| [Co]/[ED] | [mol/mol] | 10 |
| [Co]/[Ti] | [mol/mol] | 220 |
| Temperature | [°C] | 30 |
| Residence time | [min] | 5 |
| **Loop reactor** | | |
| Temperature | [°C] | 75 |
| Split | [wt.-%] | 52 |
| H2/C3 | [kg/ton] | 22 |
| $MFR_2$ | [g/10 min] | 160 |
| **1st Gas phase reactor** | | |
| Temperature | [°C] | 80 |
| Split | [wt.-%] | 34 |
| H2/C3 | [mol/kmol] | 175 |
| $MFR_2$ | [g/10 min] | 160 |
| XCS | [wt.-%] | 2.0 |
| **2nd Gas phase reactor** | | |
| Temperature | [°C] | 80 |
| Split | [wt.-%] | 14 |
| H2/C3 | [mol/kmol] | 250 |
| C2/C3 | [mol/kmol] | 550 |
| $MFR_2$ | [g/10 min] | 99 |
| C2 | [wt.-%] | 6.5 |
| **Final Properties (pellet)** | | |
| $MFR_2$ | [g/10 min] | 100 |
| C2 | [wt.-%] | 6.0 |
| SF (CRYSTEX) | [wt.-%] | 14.5 |
| C2(SF) | [wt.-%] | 32 |
| iV(SF) | [dL/g] | 1.9 |
| CF (CRYSTEX) | [wt.-%] | 85.5 |
| C2(CF) | [wt.-%] | 2.0 |
| iV(CF) | [dL/g] | 1.15 |
| C2(XCS) | [wt.-%] | 54.0 |
| iV(XCS) | [dL/g] | 2.0 |
| $T_m$ | [°C] | 165 |
| $T_c$ | [°C] | 121 |
| Tensile modulus | [MPa] | 1400 |
| Charpy NIS, 23°C | [$kJ/m^2$] | 3.2 |

The heterophasic copolymer HECO was compounded in a co-rotating twin-screw extruder Coperion ZSK 47 at 220°C with 0.15 wt.-% antioxidant (Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4); 0.05 wt.-% of Ca-stearate (CAS-no.1592-23-0, commercially available from Faci, Italy).

**Preparation of the polypropylene composition (C)**

PP1 or HECO (for RE1) and PPB were melt blended on a co-rotating twin screw extruder with the flame retardant composition (FR), the glass fibers (GF), the adhesion promoter (AP) and the additives (AD) in the amounts indicated in Table 3 below.

**Table 3:** Composition and properties of the comparative and inventive examples

|  |  | RE1 | IE1 | IE2 | CE1 | CE2 |
|---|---|---|---|---|---|---|
| **HECO** | [wt.-%] | 44.35 | - | - | - | - |
| **PP1** | [wt.-%] | - | 24.35 | 24.35 | 22.85 | 23.85 |
| **PPB-1** | [wt.-%] | - | 20.0 | - | 21.0 | 22.0 |
| **PPB-2** |  | - | - | 20.0 | - | - |
| **FR** | [wt.-%] | 23.0 | 23.0 | 23.0 | 23.0 | 21.0 |
| **GF** | [wt.-%] | 30.0 | 30.0 | 30.0 | 30.0 | 30.0 |
| **AP** | [wt.-%] | 1.5 | 1.5 | 1.5 | 2.0 | 2.0 |
| **CB** | [wt.-%] | 0.7 | 0.7 | 0.7 | 0.7 | 0.7 |
| **AO1** | [wt.-%] | 0.25 | 0.25 | 0.25 | 0.25 | 0.25 |
| **AO2** | [wt.-%] | 0.1 | 0.1 | 0.1 | 0.1 | 0.1 |
| **AO3** | [wt.-%] | 0.1 | 0.1 | 0.1 | 0.1 | 0.1 |
|  |  |  |  |  |  |  |
| **MFR** | [g/10min] | 8.3 | 20.0 | 15.0 | 15.1 | 19.1 |

**PP1** is the commercial propylene homopolymer HL504FB by Borealis, which has a melt flow rate (ISO 1133; 230 °C, 2.16 kg load) of 450 g/10min, a melting temperature Tm of 161°C, a flexural modulus of 1519 MPa and has been produced by visbreaking from a base polymer produced with a post-phthalate Ziegler-Natta type catalyst

**FR** is the commercial flame retardant composition Phlamoon-1090A of SULI comprising 55 to 60 wt.-% melamine polyphosphate and 40 to 55 wt.-% piperazine pyrophosphate.

**GF** is the commercial product ECS 03 T-480H of Nippon Electric Glass Co., Ltd. having a filament diameter of 13.0 $\mu$m and a strand length of 3 mm.

**AP** is the adhesion promoter SCONA TPPP 8112 GA by Scona being a polypropylene functionalized with maleic anhydride having a maleic anhydride content of 1.4 wt.-% and a MFR (190 °C, 2.16 kg) above 80 g/10 min.

**CB** is a masterbatch comprising 40 wt.-% carbon black

**AO1** is the antioxidant 2,2'-oxamido bis-(ethyl-3-(3,5-di-tert. butyl-4-hydroxyphenyl)propionate) commercially available as Naugard XL-1 of Addivant

**AO2** is the antioxidant tris (2,4-di-t-butylphenyl) phosphite commercially available as Irgafos 168 of BASF

**AO3** is the antioxidant pentaerythrityl-tetrakis(3-(3',5'-di-tert. butyl-4-hydroxyphenyl)-propionate commercially available as Irganox 1010 of BASF

The flame retardancy and mechanical properties of the comparative and inventive compositions are summarized in Table 4.

**Table 4:** Properties of the comparative and inventive examples

|  | RE1 | IE1 | IE2 | CE1 | CE2 |
|---|---|---|---|---|---|
| **Class at 1.5 mm specimen thickness (condition part 1)*** | V-0 | V-0 | V-0 | V-0 | Fail |

(continued)

|  | | RE1 | IE1 | IE2 | CE1 | CE2 |
|---|---|---|---|---|---|---|
| **Class at 1.5 mm specimen thickness (condition part 2)\*\*** | | V-0 | V-0 | V-0 | Fail | Fail |
| **Tensile Modulus** | [MPa] | 8320 | 7000 | 7070 | 8280 | n.d. |
| **Tensile Strength** | [MPa] | 84.1 | 70.1 | 78 | 86.2 | n.d. |
| **Tensile Stress at break** | [MPa] | 2.7 | 2.3 | 2.8 | 2.2 | n.d. |
| **Charpy notched impact strength (23 °C)** | [kJ/m$^2$] | 10.0 | 7.2 | 8.1 | 7.6 | n.d. |

* UL94 vertical burning test was carried out under condition part 1 as described above under "Measuring methods - UL94 vertical burning test", i.e. samples were conditioned in a constant room temperature of $23\pm2$ °C and $50\pm10\%$ humidity for 48 hours.
** UL94 vertical burning test was carried out under condition part 2 as described above under "Measuring methods - UL94 vertical burning test", i.e. the samples were conditioned in an air circulating oven for 168 hours at $70 \pm 1$ °C and then cooled in the desiccator for at least 4 hours at room temperature.
n.d. = not determined

Inventive examples !E1 and IE2 comprising 20.0 wt.-% mixed plastics polypropylene blends PPB-1 and PPB-2 surprisingly show comparable properties to reference example RE1 which only includes virgin heterophasic propylene copolymer HECO as propylene based polymer.
Comparative example CE1 comprising 21.0 wt.-% mixed plastics polypropylene blend PPB-1 fails the UL94 vertical burning test under condition part 2. Comparative example CE2 comprising 22.0 wt.-% mixed plastics polypropylene blend PPB-1 fails the UL94 vertical burning test under conditions part 1 and part 2. These compositions therefore are not suitable as flame retardant material for electronic enclosures.

## Claims

1.    Polypropylene composition (C), comprising

   i) 5.0 to 40.0 wt.-% of a propylene homopolymer (PP-H) having a melt flow rate $MFR_2$ (230 °C, 2.16 kg) determined according to ISO 1133 of at least 75.0 g/10 min,
   ii) 5.0 to 20.5 wt.-% of a mixed-plastics polypropylene blend (PPB) having a melt flow rate $MFR_2$ (230 °C, 2.16 kg) determined according to ISO 1133 of at least 15.0 g/10 min
   iii) 10.0 to 40.0 wt.-% of a flame retardant (FR),
   iv) 10.0 to 40.0 wt.-% of fibers (F), and
   v) 0.0 to 5.0 wt.-% of an adhesion promoter (AP),

   wherein all weight contents are based on the overall weight of the polypropylene composition (C).

2.    The polypropylene composition (C) according to claim 1 having a melt flow rate $MFR_2$ of from 2.5 to 30.0 g/10 min, preferably from 5.0 to 25.0 g/10 min, more preferably from 10.0 to 22.5 g/10 min, determined according to ISO 1133 at 2.16 kg and 230°C.

3.    The polypropylene composition (C) according to claims 1 or 2 having a Charpy notched impact strength at 23°C of at least 6.5 kJ/m$^2$, such as from 6.5 to 15.0 kJ/m$^2$, preferably from 6.7 to 12.5 kJ/m$^2$, more preferably from 7.0 to 10.0 kJ/m$^2$, determined according to ISO 179-1 / 1eA at 23 °C.

4.    The polypropylene composition (C) according to any one of the preceding claims having one or more or all of the following properties:

   • a tensile modulus of at least 5500 MPa, such as from 5500 to 10000 MPa, preferably from 6000 to 9500 MPa, more preferably from 6250 to 9000 MPa;
   • a tensile strength of at least 50 MPa, such as from 50 to 100 MPa, preferably from 55 to 95 MPa, more preferably from 60 to 90 MPa;
   • a tensile stress at break of at least 1.7 %, such as from 1.7 to 5.0 %, preferably from 2.0 to 4.5 %, more preferably from 2.2 to 4.0 %,

all determined according to ISO 527-1A at 23°C.

5. The polypropylene composition (C) according to any one of the preceding claims having one or more or all of the following properties:

   • a UL94 classification of V-0 in the UL94 flame retardancy test after 48 hours conditioning according to condition part 1;
   • a UL94 classification of V-0 in the UL94 flame retardancy test after 168 hours conditioning according to condition part 2,

   each on injection moulded samples of 125±5 mm length, 13.0±0.5 mm width and a thickness of 1.5 mm.

6. The polypropylene composition (C) according to any one of the preceding claims, wherein

   i) the polypropylene composition (C) does not contain fluoropolymers in amounts exceeding 0.5 wt.-%, more preferably 0.1 wt.-%, still more preferably 0.01 wt.-%, like 0.001 wt.-%, most preferably is free of fluoropolymers, and/or
   ii) the nitrogen-containing flame retardant (FR) is free of halogens.

7. The polypropylene composition (C) according to any one of the preceding claims, wherein the mixed-plastics polypropylene blend (PPB) has

   • a crystalline fraction (CF) content determined according to CRYSTEX QC analysis in the range from 80.0 to 96.0 wt.-%, preferably in the range from 82.5 to 95.5 wt.-%, and
   • a soluble fraction (SF) content determined according to CRYSTEX QC analysis in the range from 4.0 to 20.0 wt.-%, preferably in the range from 4.5 to 17.5 wt.-%, whereby
   • said crystalline fraction (CF) has an ethylene content (C2(CF)), as determined by FT-IR spectroscopy calibrated by quantitative $^{13}$C-NMR spectroscopy, in the range from 1.0 to 15.0 wt.-%, preferably in the range of 1.5 to 12.5 wt.-%;
   • said crystalline fraction (CF) has an intrinsic viscosity (iV(CF)) in the range from 0.9 to 2.1 dl/g, preferably in the range of 1.0 to 2.0 dl/g, more preferably in the range of 1.1 to 1.9 dl/g;
   • said soluble fraction (SF) has an ethylene content (C2(SF)), as determined by FT-IR spectroscopy calibrated by quantitative $^{13}$C-NMR spectroscopy, in the range from 15.0 to 40.0 wt.-%, preferably in the range of 20.0 to 37.5 wt.-%; and
   • said soluble fraction (SF) has an intrinsic viscosity (iV(SF)) in the range from 0.9 to 2.2 dl/g, preferably in the range of 1.0 to 2.1 dl/g, more preferably in the range of 1.1 to 2.0 dl/g.

8. The polypropylene composition (C) according to any one of the preceding claims, wherein the mixed-plastics polypropylene blend (PPB) has one or more or all of the following properties:

   • a melt flow rate MFR$_2$ of 15.0 to 40 g/10min, preferably of 16.5 to 35.0 g/10min, more preferably of 17.5 to 30.0 g/10min, determined according to ISO 1133 at 2.16 kg and 230°C;
   • a density of from 900 to 1030 kg/m$^3$, preferably from 905 to 1020 kg/m$^3$, more preferably from 910 to 1010 kg/m$^3$, determined according to ISO 1183;
   • a limonene content as determined by using solid phase microextraction (HS-SPME-GC-MS) of 1 to 250 mg/m$^3$;
   • a tensile modulus of from 1000 MPa to 1750 MPa, preferably from 1100 MPa to 1600 MPa, determined according to ISO 527-2;
   • a Charpy Notched Impact Strength at 23°C of from 3.0 to 7.5 kJ/m$^2$, preferably from 4.0 to 7.0 kJ/m$^2$, determined according to ISO 179-1 / 1eA at 23°C.

9. The polypropylene composition (C) according to any one of the preceding claims, wherein the flame retardant (FR) is a nitrogen-containing flame retardant (FR), more preferably comprises a first nitrogen-containing phosphate (FR1) and a second nitrogen-containing phosphate (FR2), and optionally wherein the weight ratio between the first nitrogen-containing phosphate (FR1) and the second nitrogen-containing phosphate (FR2) is in the range of 60:40 to 40:60.

10. The polypropylene composition (C) according to claim 9, wherein the first nitrogen-containing phosphate (FR1) is melamine polyphosphate and the second nitrogen-containing phosphate (FR2) is piperazine pyrophosphate.

11. The polypropylene composition (C) according to any one of the preceding claims, wherein the propylene homopolymer (PP-H) having a melt flow rate $MFR_2$ (230 °C, 2.16 kg) determined according to ISO 1133 in the range of 105 to 600 g/10 min.

12. The polypropylene composition (C) according to any one of the preceding claims, wherein the fibers (F) are glass fibers (GF), preferably short glass fibers (SGF) having a weight average fiber length determined according to the FASEP method as described in "methods" after injection moulding according to EN ISO 1873-2 in the range of 0.2 to 1.2 mm.

13. The polypropylene composition (C) according to any one of the preceding claims, wherein the adhesion promoter (AP) is a polar modified polypropylene (PM-PP) being a propylene homo- or copolymer grafted with maleic anhydride having a melt flow rate $MFR_2$ (230 °C, 2.16 kg) determined according to ISO 1133 of at least 20.0 g/10 min.

14. The polypropylene composition (C) according to any one of the preceding claims, wherein the overall amounts of the propylene polymer (PP), the flame retardant (FR), the fibers (F) and optionally the adhesion promoter (AP) together make up at least 90 wt.-% of the polypropylene composition (C).

15. An article comprising the polypropylene composition (C) according to any one of claims 1 to 14.

Europäisches
Patentamt

European
Patent Office

Office européen
des brevets

# EUROPEAN SEARCH REPORT

Application Number

EP 23 19 0570

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WO 2022/189647 A1 (BOREALIS AG [AT]) 15 September 2022 (2022-09-15) * page 8, line 6 – page 9, line 9 * * page 14, line 15 – page 15, line 16; claims; examples IE3,IE4 * ----- | 1-15 | INV. C08L23/12 |
| Y | US 2022/025150 A1 (KAHLEN SUSANNE [AT] ET AL) 27 January 2022 (2022-01-27) * paragraphs [0167] – [0170], [0251]; claims * ----- | 1-15 | |
| A | US 2021/355287 A1 (WEN LIANG [NL]) 18 November 2021 (2021-11-18) * paragraphs [0001], [0002], [0141]; claims * ----- | 1-15 | |
| | | | TECHNICAL FIELDS SEARCHED (IPC) |
| | | | C08L |

The present search report has been drawn up for all claims

| Place of search | Date of completion of the search | Examiner |
|---|---|---|
| Munich | 2 February 2024 | Iraegui Retolaza, E |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 23 19 0570**

This annex lists the patent family members relating to the patent documents cited in the above-mentioned European search report.
The members are as contained in the European Patent Office EDP file on
The European Patent Office is in no way liable for these particulars which are merely given for the purpose of information.

**02-02-2024**

| Patent document cited in search report | | | Publication date | Patent family member(s) | | | Publication date |
|---|---|---|---|---|---|---|---|
| WO 2022189647 | A1 | | 15-09-2022 | BR | 112023018113 | A2 | 31-10-2023 |
| | | | | CN | 116940629 | A | 24-10-2023 |
| | | | | EP | 4305101 | A1 | 17-01-2024 |
| | | | | KR | 20230154266 | A | 07-11-2023 |
| | | | | WO | 2022189647 | A1 | 15-09-2022 |
| US 2022025150 | A1 | | 27-01-2022 | CN | 112714781 | A | 27-04-2021 |
| | | | | EP | 3861066 | A1 | 11-08-2021 |
| | | | | KR | 20210042974 | A | 20-04-2021 |
| | | | | TW | 202024211 | A | 01-07-2020 |
| | | | | US | 2022025150 | A1 | 27-01-2022 |
| | | | | WO | 2020070176 | A1 | 09-04-2020 |
| US 2021355287 | A1 | | 18-11-2021 | CN | 112739757 | A | 30-04-2021 |
| | | | | EP | 3856829 | A1 | 04-08-2021 |
| | | | | US | 2021355287 | A1 | 18-11-2021 |
| | | | | WO | 2020064752 | A1 | 02-04-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022189647 A1
- EP 0320150 A
- EP 0480190 A
- EP 0622380 A
- EP 1303547 A
- EP 1538167 A
- EP 1783145 A
- WO 2007140019 A
- US 3940379 A
- US 4951589 A

- US 4282076 A
- US 5250631 A
- EP 0462574 A
- WO 02096986 A
- WO 2004113438 A
- EP 3786190 A1
- US 4506056 A
- US 4753997 A
- EP 1805238 A

**Non-patent literature cited in the description**

- **HANS ZWEIFEL**. Plastic Additives Handbook. 2009, 1141-1190
- **SINGH, G.** ; **KOTHARI, A.** ; **GUPTA, V.** *Polymer Testing*, 2009, vol. 28 (5), 475
- **ZHOU, Z.** ; **KUEMMERLE, R** ; **QIU, X.** ; **REDWINE, D.** ; **CONG, R.** ; **TAHA, A.** ; **BAUGH, D** ; **WINNIFORD, B.** *J. Mag. Reson*, 2007, vol. 187, 225
- **BUSICO, V.** ; **CARBONNIERE, P.** ; **CIPULLO, R.** ; **PELLECCHIA, R** ; **SEVERN, J.** ; **TALARICO, G**. *Macromol. Rapid Commun*, 2007, vol. 28, 1128
- **CHENG, H. N.** *Macromolecules*, 1984, vol. 17, 1950
- **RESCONI, L.** ; **CAVALLO, L.** ; **FAIT, A.** ; **PIEMON-TESI, F.** *Chem. Rev.*, 2000, vol. 100, 1253
- **WANG, W-J.** ; **ZHU, S.** *Macromolecules*, 2000, vol. 33, 1157
- **BUSICO, V.** ; **CIPULLO, R.** *Prog. Polym. Sci*, 2001, vol. 26, 443
- **BUSICO, V.** ; **CIPULLO, R.** ; **MONACO, G.** ; **VACATELLO, M.** ; **SEGRE, A.L**. *Macromoleucles*, 1997, vol. 30, 6251
- **RESCONI, L.** ; **CAVALLO, L** ; **FAIT, A** ; **PIEMONTE-SI, F**. *Chem. Rev*, 2000, vol. 100, 1253

- **RESCONI, L.** ; **CAVALLO, L** ; **FAIT, A.** ; **PIEMON-TESI, F**. *Chem. Rev.*, 2000, vol. 100, 1253
- **WANG, W-J.** ; **ZHU, S**. *Macromolecules*, 2000, vol. 33, 1157
- **KAKUGO, M.** ; **NAITO, Y.** ; **MIZUNUMA, K.** ; **MIYATAKE, T**. *Macromolecules*, 1982, vol. 15, 1150
- **LJILJANA JEREMIC** ; **ANDREAS ALBRECHT** ; **MARTINA SANDHOLZER** ; **MARKUS GAHLEIT-NER**. Rapid characterization of high-impact ethylene-propylene copolymer composition by crystallization extraction separation: comparability to standard separation methods. *International Journal of Polymer Analysis and Characterization*, 2020, vol. 25 (8), 581-596
- **VAN GEMERT L. J.** Odour Thresholds: Compilations of odour threshold values in air, water and other media. *Utrecht, Oliemans Punter & Partners BV*, 2011
- *CHEMICAL ABSTRACTS*, 6683-19-8
- *CHEMICAL ABSTRACTS*, 31570-04-4
- *CHEMICAL ABSTRACTS*, 1592-23-0